Europäisches Patentamt

European Patent Office

Office européen des brevets

(11) Publication number: **0 447 695 A1**

## EUROPEAN PATENT APPLICATION

(21) Application number: 90203530.2

(51) Int. Cl.5: **F16K 17/06**, G05D 16/06

(22) Date of filing: 29.12.90

(30) Priority: 09.03.90 IT 2078190 U

(43) Date of publication of application:
25.09.91 Bulletin 91/39

(84) Designated Contracting States:
AT BE CH DE DK ES FR GB GR LI LU NL SE

(71) Applicant: **METAL WORK S.p.A.**
**Via Segni, 7**
**I-25062 Concesio (Brescia)(IT)**

(72) Inventor: **Rodella, Fausto**
**Via Trento, 24**
**I-25060 Collebeato (Brescia)(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) **Pressure control valve.**

(57) A pressure control valve (10) reduces the pressure of a fluid, flowing into its inlet duct (11), to a pre-set and substantially constant value before delivering it from its outlet duct (13). Said valve (10) has a plug member (12) which is made to slide axially, against the adjustable action of a spring (28), by the pressure in the outlet duct (13), to close an aperture connecting the outlet duct (13) to the inlet duct (11) when said pressure reaches the pre-set value.

The plug member has an O-ring (21) to seal off a further passage between the outlet duct (13) and inlet duct (11) during normal operation. The groove (22) housing the O-ring has a step (23) on the side facing towards the portion in communication with the inlet duct (11) so as to prevent the seal of the O-ring when the pressure in the outlet duct becomes higher than the pressure in the inlet duct.

In this way, whenever a pressure drop occurs in the inlet duct (11), the pressure in the system connected to the outlet duct (13) is automatically relieved.

Fig.1

Fig.4

This invention refers to the improvement of a pressure control valve.

There are known pressure control valves which are used for reducing the pressure of an incoming fluid to a lower and substantially constant value. In these valves it sometimes occurs that under certain conditions, if for any reason whatsoever the inlet pressure drops to a value lower than the desired outlet pressure, the valve remains closed. Consequently, for example, if the valve inlet is disconnected from the source of fluid under pressure, the system downstream remains under pressure. This makes it necessary to provide a suitable relief valve which must always be operated before being able to operate on the system downstream of the control valve, since it is not sufficient to simply disconnect the source of fluid under pressure. Apart from giving rise to additional production costs, it is easy to imagine the hazards resulting from the possible failure to operate the relief valve. The general scope of this invention is to obviate the aforementioned problems by providing a valve of the pressure control type which, when the inlet pressure drops to zero or lower than the preset required outlet pressure, substantially equalizes the outlet pressure to the inlet pressure under any condition whatsoever. In this way, for example, when the inlet connection to the valve is disconnected the pressure in the system downstream is released and drops to ambient pressure.

This scope is achieved according to the invention by providing a pressure control valve capable of reducing the pressure of a fluid flowing into its inlet duct, to a pre-set and substantially constant value before delivering it from its outlet duct, of the type having a plug member which is made to slide axially, against the adjustable action of a spring, by the pressure in the outlet duct, so as to close an aperture connecting the outlet duct to the inlet duct when said pressure reaches the pre-set value, one end of the plug member being received in a complementary cylindrical housing in the valve casing and carrying an O-ring disposed in a circumferential groove so as to outwardly adhere to the side wall of said complementary housing, the complementary housing being in communication on one side of the O-ring with the inlet duct and on the other side with the outlet duct, characterized by the fact that the circumferential groove receiving te O-ring has a first wall towards the portion of the housing in connection with the outlet duct disposed substantially in a plane perpendicular to the sliding axis of the plug member so as to form a seal when the O-ring rests upon it, the circumferential groove receiving the O-ring also having a second wall towards the portion of the housing in connection with the inlet duct made with at least one step-shaped discontinuity, the bottom of the groove having, at least substantially in correspondence with the discontinuity, a depressed portion so as to constitute together with the discontinuity a passage between the inlet and outlet ducts which is not sealed off by the O-ring.

The innovatory principles of this invention and its advantages with respect to the known technique will be more clearly evident from the following description of a possible exemplificative and nonrestrictive embodiment applying such principles, with reference to the accompanying drawings, in which:

- figure 1 shows a schematic partial crosssectional view of a control valve according to the invention;
- figure 2 shows an enlarged view of a detail of the valve of figure 1;
- figure 3 shows a partial cross-sectional view along the line III-III of figure 2;
- figure 4 shows a cross-sectional view along the line IV-IV of figure 3.

With reference to the figures, a pressure control valve, generically indicated by reference 10, comprises a high-pressure inlet duct 11 connected, with interposition of an axially sliding plug member 12, to a controlled-pressure outlet duct 13. The plug member 12 has an upper seal 20 and a circumferential O-ring 21.

The plug member 12 is operatively connected to a flexible diaphragm 14 which is subjected on one side, through a communicating duct 15, to the pressure in the duct 13 and on the opposite side to the thrust of a counter spring 16 whose compression is adjustable by turning a knob 17.

According to the known technique, in order to obtain a balanced control valve, that is to say, whose plug member is unaffected by the forces of pressure, due in particular to inlet pressure variations, exerted on it directly and not through the diaphragm 14, the end of the plug member opposite that which closes the valve is disposed in a chamber 18 connected, through a duct 19, to the outlet duct 13. In this way, the outlet pressure is exerted upon opposite faces of the plug member as is the inlet pressure and the forces generated cancel each other out. As can be easily imagined by any technician, when the pressure in the duct 13 is lower than the pressure pre-set by adjusting the spring 16, the plug member 12 is pushed downwards by the latter thereby opening the upper passage between duct 11 and duct 13. When the pressure in the duct 13 begins to exceed the desired value, the diaphragm 14 rises against the action of the spring 16 and the plug member 12, under the thrust of a lower spring 28, recloses said upper passage between ducts 11 and 13.

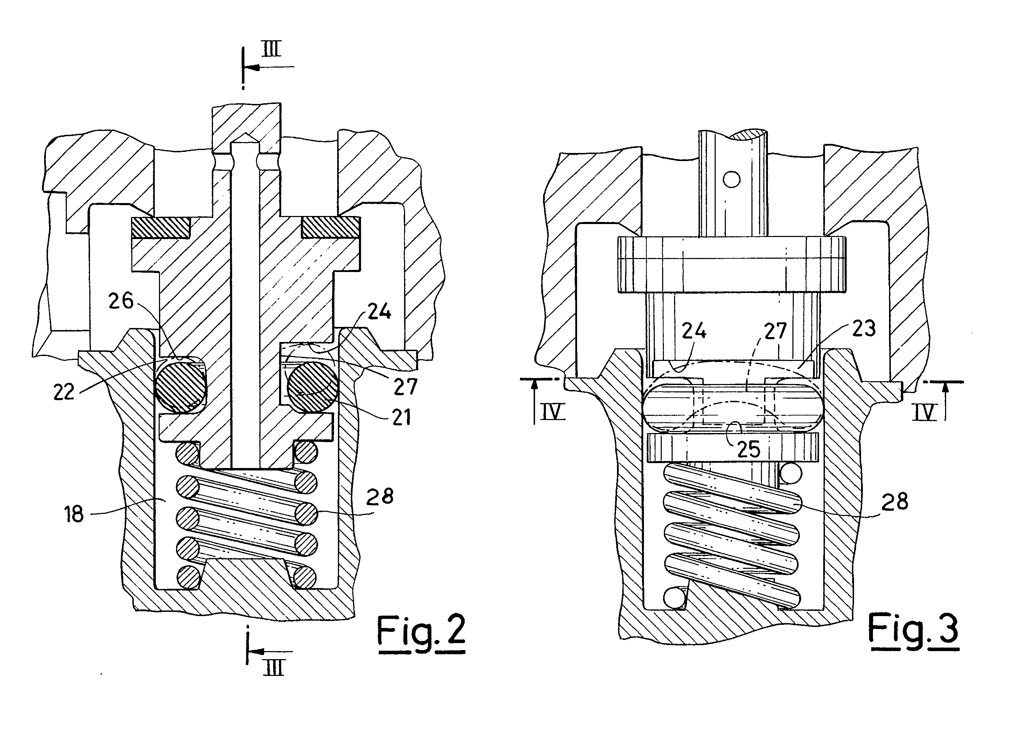

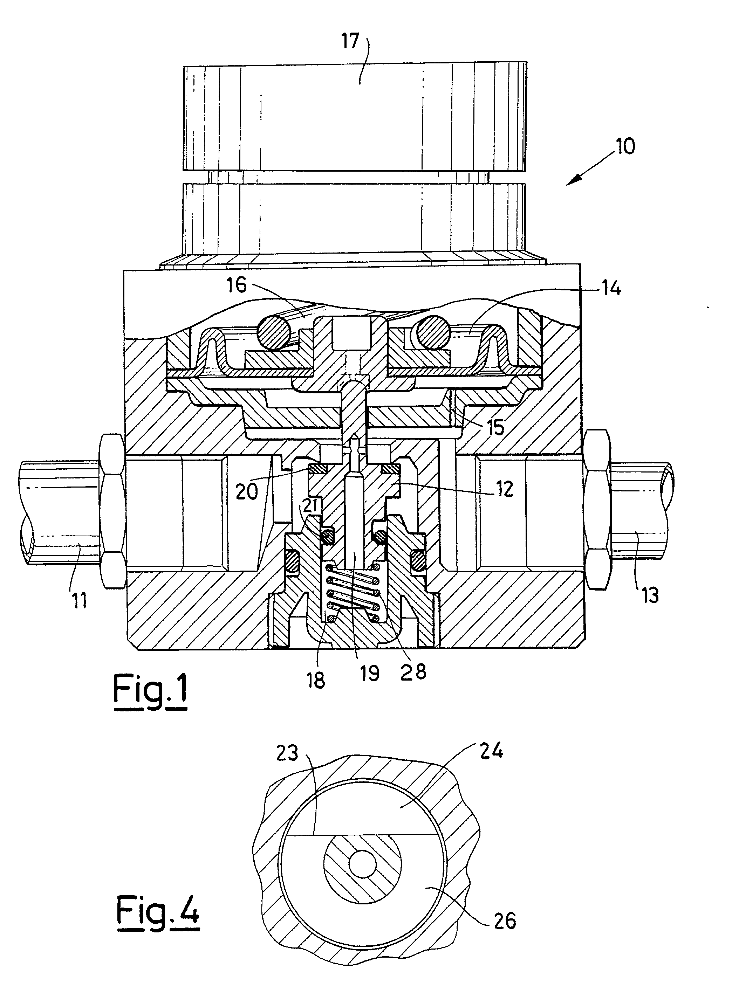

Thus the pressure of the fluid flowing from the valve is adjusted to a substantially constant pre-set value. Up to here the described valve is substantially similar to the known technique. As can be clearly seen in figures 2, 3 and 4, according to the innovatory principles of this invention, the O-ring 21 is disposed in a circumferential groove 22 with a side wall 25, facing towards the chamber 18, composed of a surface completely contained in a plane perpendicular to the axis of the plug member, and an opposite side wall composed of a first portion 26 and a second portion 24 axially spaced apart so as to define a step 23. Moreover, the bottom of the groove 22 comprises a depressed portion 27 close to the step 23. The step 23 and the depressed portion 27 are advantageously made like a single flat surface, for example by means of a milling machine which, in one operation, as is easily imaginable by any expert in the art, cuts the surface formed by the step 23, the portion 27 and the surface 24 from a circumferential groove 22, with a rectangular cross-section around its entire circumference.

During the operation of the valve, while the pressure at the inlet 11 remains at a value higher than the pressure at the outlet 13, the O-ring 21 is subjected to a pressure difference which keeps it pressed (as shown by the continuous line in figures 2 and 3) against the surface 25 and against the side wall of the chamber 18, thereby forming the necessary seal. In this way the valve behaves normally, adjusting the outlet pressure to the value preset by means of the knob 17.

When the inlet pressure drops below the outlet pressure, the difference in pressure acting on the O-ring 21 changes from a plus to a minus value and the O-ring is pushed towards the opposite side of the groove 22. Because of the step 23, the O-ring 21 cannot adhere to said opposite side and therefore behaves as shown by the broken and dotted line in figures 2 and 3. A passage is thus obtained, along the step 23 and the surface 27, between the chamber 18, in communication with the outlet 13, and the inlet 11. In this way, the fluid under pressure in the duct 13 can flow into the duct 11. When the pressure in the duct 13 has dropped below the value set by adjusting the spring 16, the plug member 12 also opens, thereby increasing the speed of flow of the fluid.

If the duct 11 is, for example, at ambient pressure because it is disconnected from the source of fluid under pressure, then the system downstream of the valve will also drop to ambient pressure.

When the inlet pressure is increased to a value higher than the valve outlet pressure, the difference in pressure on the O-ring pushes it back against the wall 25 of its housing restoring its seal and the valve resumes its normal pressure control function.

As can be seen, by applying the innovatory principles claimed herein, the aforesaid scopes are achieved with a minimum additional cost and mechanical complexity compared to the valves of known technique.

The foregoing description of an embodiment applying the innovatory principles of this invention is obviously given purely by way of example in order to illustrate such innovatory principles and should not therefore be understood as a limitation to the sphere of the invention claimed herein.

For example, the control structure for maintaining a constant valve outlet pressure can differ from that described, as is easily imaginable by any technician.

Moreover, the chamber 18 can be connected to the outlet duct 13 through the valve casing instead of by means of the duct 19 passing through the body of the plug member. Lastly, the discontinuity represented by the step 24 and the depression 27 of the bottom of the groove can be repeated one or more times around the entire circumference of the groove 22.

## Claims

1. Pressure control valve capable of reducing the pressure of a fluid flowing into its inlet duct, to a pre-set and substantially constant value before delivering it from its outlet duct, of the type having a plug member which is made to slide axially, against the adjustable action of a spring, by the pressure in the outlet duct, so as to close an aperture connecting the outlet duct to the inlet duct when said pressure reaches the pre-set value, one end of the plug member being received in a complementary cylindrical housing in the valve casing and carrying an O-ring disposed in a circumferential groove so as to outwardly adhere to the side wall of said complementary housing, the complementary housing being in communication on one side of the O-ring with the inlet duct and on the other side with the outlet duct, characterized by the fact that the circumferential groove receiving the O-ring has a first wall towards the portion of the housing in connection with the outlet duct disposed substantially in a plane perpendicular to the sliding axis of the plug member so as to form a seal when the O-ring rests upon it, the circumferential groove receiving the O-ring also having a second wall towards the portion of the housing in connection with the inlet duct made with at least one step-shaped discontinuity, the bottom of the groove having, at least substantially in correspondence with the discontinuity, a depressed portion so as to constitute together with the discontinuity a passage between the inlet and outlet ducts which is not sealed off by the O-ring.

2. Valve as claimed in claim 1, characterized by the fact that the step-shaped discontinuity and the depressed portion of the bottom of the groove define a single flat surface substantially parallel to the axis of the plug member.

Fig.2

Fig.3

EP 0 447 695 A1

Fig.1

Fig.4

## DOCUMENTS CONSIDERED TO BE RELEVANT

EP 90203530.2

| Category | Citation of document with indication, where appropriate, of relevant passages | Relevant to claim | CLASSIFICATION OF THE APPLICATION (Int. Cl.5) |
|---|---|---|---|
| A | US - A - 3 990 470 (MALEC) * Totality * | 1 | F 16 K 17/06 G 05 D 16/06 |
| A | US - A - 4 899 983 (BERRONG et al.) * Totality * | 1,2 | |
| A | US - A - 3 460 559 (PULLEN et al.) * Totality * | 1 | |
| A | US - A - 1 963 725 (TEETOR) *. Fig.. 1-4 * | 1,2 | |

TECHNICAL FIELDS SEARCHED (Int. Cl.5)

F 16 K
G 05 D
F 16 J

The present search report has been drawn up for all claims

| Place of search | Date of completion of the search | Examiner |
|---|---|---|
| VIENNA | 22-05-1991 | ROUSSARIAN |

EPO FORM 1503 03.82 (P0401)